# EUROPÄISCHE PATENTSCHRIFT

(11) **EP 0 421 212 B1**
(45) Veröffentlichungstag und Bekanntmachung des Hinweises auf die Patenterteilung: **11.05.1994**
(21) Anmeldenummer: 90118245.1
(22) Anmeldetag: 22.09.1990
(51) Int. Cl.: F02C 7/042, F02K 7/16, F02K 1/08

(54) **Gasturbinenstrahltriebwerk mit mindestens einem axial verfahrbar angeordneten Schieber**
Gasturbine jet engine with at least one axially movable closure member
Réacteur avec au moins un élément de fermeture axialement mobile

(30) Priorität: 30.09.1989 DE 3932791
(43) Veröffentlichungstag der Anmeldung: 10.04.1991
(73) Patentinhaber: MTU MOTOREN- UND TURBINEN-UNION MÜNCHEN GMBH, D-80976 München (DE)
(72) Erfinder: Herzog, Claus, D-8000 München 60 (DE)

(56) Entgegenhaltungen:
- US-A- 2 955 414
- US-A- 3 176 462

## Beschreibung

Die Erfindung bezieht sich auf ein Gasturbinenstrahltriebwerk nach dem Oberbegriff des Patentanspruchs 1.

Es ist allgemein bekannt, bei Gasturbinen - bzw. Gasturbinenstrahltriebwerken axial verfahrbare bzw. verstellbare, tropfenförmige oder pilzförmige, als überwiegend in sich geschlossene Körper ausgebildete Schieber als Absperr- oder Steuermittel vorzusehen. Bei derartigen Schieberkonstruktionen, z. B. in Tropfen- oder Pilzform sowie mit einem in Richtung der Strömung rotationssymmetrisch divergent/konvergenten Konturverlauf wird an der Stelle des größten Schieberdurchmessers eine kreiszylindrische Absperrfläche ausgebildet; mithin ergeben sich dabei vergleichsweise große Schieberdurchmesser, die in keinem vernünftigen Verhältnis zu schon erzielbaren Triebwerks- oder -komponentendurchmessern stehen; letzteres also bezüglich Triebwerken, die - trotz hohen Leistungs- und Einsatzspektrums - vergleichsweise geringe aerodynamische Stirnflächenwiderstände erzielen lassen sollen bzw. können. Es erfordert also ein z. B. lufteintrittsseitig anzuordnender Absperrschieber der angegebenen Art im Hinblick auf erzielbare Leistungs- und Schubvorgaben - trotz eines vergleichsweise gering veranschlagbaren Triebwerksdurchmessers einen praktisch nicht unterschreitbaren, relativ großen Gesamtdurchmesser, um in der Freigabestellung wiederum einen verhältnismäßig großen Massendurchsatz im Rahmen der erforderlichen Strömungsmachzahlen zu gewährleisten.

Auf der anderen Seite haben die genannten Schieberkonzepte wiederum den Vorteil einer vergleichsweise hohen Bauteilfestigkeit bei zugleich geringer Teilevielfalt und Störanfälligkeitsgefahr des gesamten Absperrsystems, insbesondere gegenüber z. B. schubdüsenartig ausgebildeten Mehrfachklappenkonzepten oder dergleichen. Die Gefahr einer Bruchstückansaugung und Beschädigung eines Triebwerkes ist äußerst gering zu veranschlagen.

Derartige Schieberkonzepte können z. B. eingesetzt werden, um
- ein "normales" Gasturbinenstrahltriebwerk, beispielsweise als Einkreistriebwerk, lufteintritts- und/oder abgasaustrittsseitig gegenüber der Umgebung aerodynamisch günstig abzusperren oder freizulegen; hierzu wäre ein Fluggerätekonzept vorstellbar, das separat angeordnete Staustrahl- und Turbotriebwerke aufweist, wobei letztere bei alleinigem Staustrahlantrieb abzusperren und stillzusetzen wären;
- bei einem Gasturbinenstrahltriebwerk in Mehrkreis- oder Mehrstrombauweise und variabler Leistungsaufteilung ("Wandeltriebwerk" ), die Aufteilung z. B. eines Massenstroms (Gebläse) wahlweise auf einen inneren und/oder äußeren Triebwerkskreis zu ermöglichen;
- bei einem kombinierten Gasturbinen-Staustrahltriebwerk das betreffende Turbobasistriebwerk, bei alleinigem Staustrahlantrieb, gegenüber einer Staudruckluftströmung lufteintrittsseitig bzw. abgasaustrittsseitig abzusperren; dabei wird beispielsweise von einem das Turbobasistriebwerk ummantelnden Staudruckluftkanal in Ringbauweise ausgegangen, der frontseitig einen gemeinsamen variablen Lufteinlauf (Bodenstart bis zum Betrieb beim Hyperschallflug) für das Basistriebwerk und den Staustrahltriebwerksteil aufweist; stromab des Heißgasaustritts (Düse) des Basistriebwerkes kann dabei der Staudruckluftkanal in eine Nach- und Zusatzverbrennungseinrichtung (Staustrahlantrieb) enthaltenden Teil nebst daran sich anschließender variabler Schubdüse übergehen. Im Rahmen des zuletzt genannten kombinierten Triebwerkskonzepts wäre eine Variante mit einem bei Staustrahlbetrieb stillgesetzten Frontgebläse vorstellbar, das im Unterschallflugbetrieb in den dabei als Nebenstromkanal für den Sekundärkreis fungierenden Staudruckluftkanal fördert.

Die Erfindung geht von einem aus der US-A 31 76 462 bekannten Triebwerk (Oberbegriff des Patentanspruchs 1) aus. Der bekannte Fall behandelt ein kombiniertes Turbo-Staustrahltriebwerk, bei dem das zentrale Turbotriebwerk - im Staustrahlbetrieb - frontal durch einen in Richtung der Strömung divergent/konvergenten, axial verstellbarer Schieber absperrbar ist; es bildet der Schieber an seinem größten Durchmesser, in einer vertikalen Querebene zur Schieberachse, eine rotationssymmetrische Absperrfläche aus, mit der er gegen ein kreiszylindrisches Stirnende eines äußeren Gehäusemantels verschiebbar ist. In für den Turbobetrieb axial in den äußeren Gehäusemantel eingefahrener Position bilden Schieber und Gehäusemantel einen in Richtung der Strömung divergenten/konvergenten Ringkanal aus, über den das Turbotrieberk mit Ansaugluft versorgt wird. Bei einer Variante des bekannten Falles ist ein gleichartiger Absperrschieber über eine zentrale Stange zur Freigabe der Ansaugluftzufuhr aus einer Ummantelung des Turbotriebwerks axial ausfahrbar und mit seinem größten Durchmesser gegen eine stromabwärtige Endfläche eines stationären Zentralkörpers verschiebbar. Bei beiden Varianten des bekannten Falles ist es nicht möglich, daß bei ausschließlichem Turbobetrieb ein Ringkanal für die Luftversorgung des Staustrahltriebwerks abgesperrt werden kann.

Der Erfindung liegt die Aufgabe zugrunde, ein Triebwerk nach dem Oberbegriff des Patentanspruchs 1 mit einem geeigneten Absperrschieber-Konzept zu schaffen, das im Hinblick auf Ausbildung und Zuordnung zum Strahl -bzw. Turbobasistriebwerk eine aerodynamisch günstige (Umgebung) Schlankhaltung des Gesamttriebwerks bei zugleich aerodynamisch optimaler luftzufuhrseitiger und/oder heißgasseitiger Absperrung oder Freilegung ermöglicht.

Die gestellte Aufgabe ist gemäß Patentanspruch 1 erfindungsgemäß gelöst.

Mit der angegebenen räumlich versetzten tropfenartigen oder pilzförmigen Schiebergestaltung ist es möglich, z. B. ein einkreisiges Gasturbinenstrahltriebwerk vergleichsweise schlank bzw. mit einem geringen Durchmesser auszuführen und in der Freigabestellung - im Hinblick auf vergleichsweise großen Massendurchsatz durch das Triebwerk (vergleichsweise großer Schubbedarf) - einen darauf abgestimmten großen Luftzuströmquerschnitt in den Verdichter im Rahmen der geforderten Strömungskriterien (u. a. Machzahlen) bereitzustellen. Dies gilt sinngemäß auch für ein kombiniertes Gasturbinen-Staustrahltriebwerk, bei dem das Turbobasistriebwerk (innen) im Unterschallflugbetrieb z. B. über einen äußeren ringförmigen Staudruckluftkanal eintrittsseitig mit der erforderlichen Ansaugluftmenge versorgbar ist, worin das verhältnismäßig schlank bzw. mit geringem Triebwerksdurchmesser gestaltbare Basistriebwerk wiederum ein mit verhältnismäßig geringem Stirnflächenwiderstand gestaltbares Gesamttriebwerk ermöglicht. Insbesondere im zuletzt genannten Fall spielt die durch die Erfindung hervorgerufene relative Baulängenvergrößerung des Absperrschiebers keine wesentliche Rolle, weil ohnehin genügender Einbauraum dafür über den frontseitigen variablen Lufteinlauf des Gesamttriebwerks zur Verfügung steht.

Im Sinne eines schrägen Zylinderschnitts des kreiszylindrischen Gehäuses des Strahl- bzw. Turbobasistriebwerks ergibt sich z. B. eine leicht gleichförmig elliptisch konturierte Gehäuselippe, gegen die der Absperrschieber mit entsprechend angepaßt konturierter elliptischer Umfangsabsperrfläche beispielsweise zum ansaugluftseitigen Absperren des Triebwerks verfahrbar ist. Es wäre aber durchaus möglich, das Triebwerksgehäuse zumindest am in Richtung auf die Gehäuselippe auslaufenden Ende im Querschnitt leicht elliptisch zu gestalten, derart, daß im Sinne eines Schrägschnittes des Gehäuses eine kreisringförmige Lippe mit entsprechender Endkante ausgebildet ist, auf die die schräge Umfangsabsperrfläche des Schiebers zylindrisch abgestimmt zu gestalten wäre.

Der in Verbindung mit einem Absperrschieber zusammenwirkende, überwiegend gegenüber Flächen des Gehäuses des Triebwerks z.B. einen ringförmigen Luftzuströmkanal einschließende Zentralkörper (stationärer Teil des Absperrsystems) kann von einer zunächst asymmetrisch zur Triebwerksachse verlaufenden Wandgeometrie aus, in stromabwärtiger Richtung, mit einer rotationssymmetrisch divergenten Wandgeometrie ausgebildet sein, um so eine geschwindigkeitserhöhende, gleichförmige Kanaleinschnürung für die Luftströmung in Richtung auf den Verdichtereintritt auszubilden; auf diese Weise können gegebenenfalls als Ursache der "Asymmetrie" des Schiebers hervorgerufene Irregularien in der Luftströmung über dem Gesamtumfang - vor Eintritt in den Verdichter - homogenisiert werden.

Vorteilhafte Ausgestaltungen der Erfindung ergeben sich aus den Patentansprüchen 2 bis 11.

Anhand der Zeichnungen ist die Erfindung beispielsweise weiter erläutert; es zeigen:
- Fig. 1: einen als Mittellängsschnitt dargestellten Frontabschnitt eines einkreisigen Gasturbinenstrahltriebwerks nebst Verdichtereintritt sowie räumlich versetzt tropfenförmigem Schieber in zwei verschiedenen Endstellungen in bezug auf eine frontseitige Gehäuselippe sowie in Zuordnung zu in der einen Schieberendstellung freigelegtem Zuströmkanal für Ansaugluft in den Verdichter,
- Fig. 2: einen Vertikal schnitt des Schiebers gemäß A - A der Fig. 1,
- Fig. 3: einen Vertikalschnitt des Schiebers gemäß B - B der Fig. 1,
- Fig. 4: einen Vertikalschnitt des Schiebers gemäß C - C der Fig. 1,
- Fig. 5: einen Vertikalschnitt des Schiebers gemäß D - D der Fig. 1,
- Fig. 6: den als Mittellängsschnitt dargestellten Frontabschnitt des Triebwerks nach Fig. 1, hier jedoch in Kombination mit einem das Turbobasistriebwerk ummantelnden Staudruckluftkanal (kombiniertes Turbinen-/Staustrahltriebwerk), worin ferner ein zusätzlicher Ringschieber zum wahlweisen Freilegen oder Absperren des Staudruckluftkanals in zwei verschiedenen Endstellungen sowie in Zuordnung zu den beiden Endstellungen des Absperrschiebers aufgezeigt ist und
- Fig. 7: eine als Mittellängsschnitt, hier jedoch in einem verkleinerten Maßstabe wiedergegebene Fortsetzung des wesentlichen Triebwerksrestes des Triebwerksfrontabschnitts nach Fig. 6 unter nochmaligem Einschluß des Verdichtereintritts, wobei der in Fig. 7 aufgezeigte Triebwerksrest - unter Fortlassung des Staudruckluftkanals - sinngemäß auch zum Frontabschnitt nach Fig. 1 paßt.

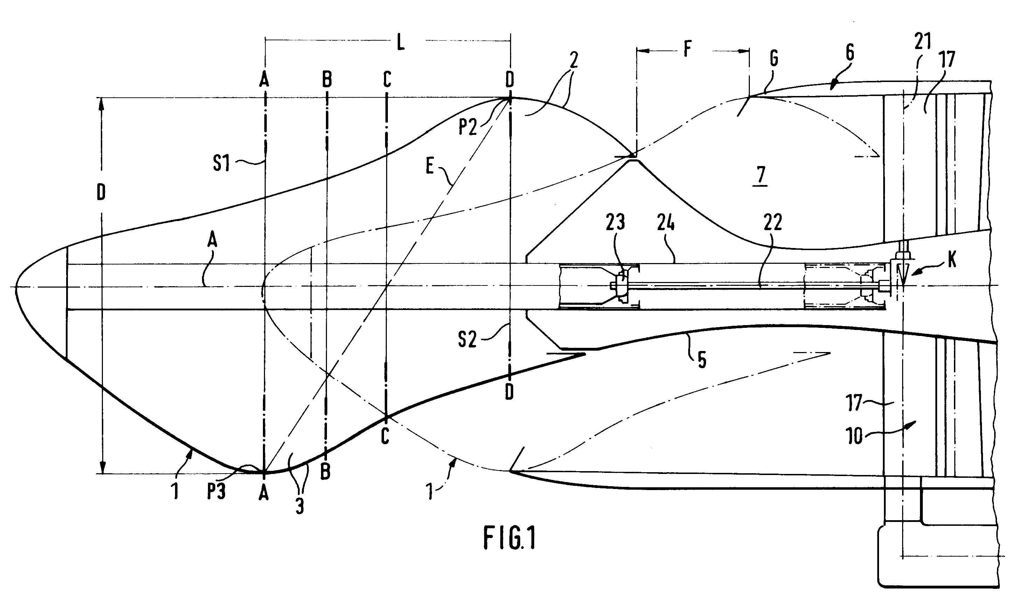

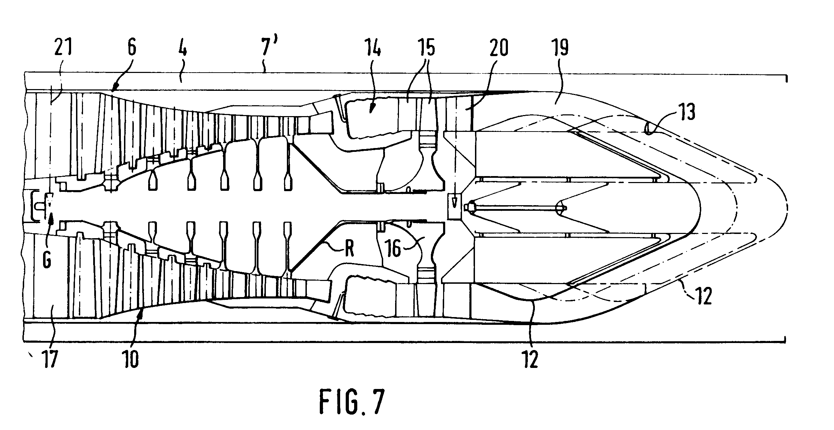

Gemäß Fig. 1 ist die dortige Absperrschieberkonstruktion in Verbindung mit einem Gasturbinenstrahltriebwerk nach Fig. 7 zu sehen, und zwar im Sinne des in Fig. 7 zugrundezulegenden Turbobasistriebwerks. Dabei handelt es sich um ein einkreisiges Strahltriebwerk in Einwellenbauweise. In Verbindung mit Fig. 1 geht es also darum, dieses Strahltriebwerk ansaugluftseitig gegenüber der äußeren Umgebung wahlweise freizulegen oder abzusperren. Gemäß Fig. 1 und 7 besteht demzufolge das Triebwerk - von links nach rechts gesehen - aus einem axial verfahrbar angeordneten Schieber 1, wobei die vollkommen freigelegte Zuströmfläche F für die Ansaugluft in das Triebwerk durch die mit ausgezogenen Linien verkörperte Abbildung des Schiebers 1 verdeutlicht ist, während die vollständige Absperrstellung dieser zuvor genannten Zuströmfläche F durch die strichpunktiert wiedergegebene Position des Schiebers 1 verdeutlicht ist. Gemäß Fig. 1 ist ferner dem Schieber 1 ein stationärer Zentralköper 5 zugeordnet, der sich in der angegebenen gänzlichen Freigabestellung der Zuströmfläche F, stromabwärtig mit zunächst asymmetrisch konvergenter Wandgeometrie an das beteffende hintere Ende des Schiebers 1 flächenbündig anschließt; dabei bildet ferner der Zentralkörper 5 zusammen mit einer zu einer Gehäuselippe G auslaufenden Wandsektion der gehäuseartigen Triebwerksummantelung 6 einen ringförmigen Luftzuströmkanal 7 aus; in der Absperrstellung der Zuströmfläche F ist der Schieber 1 gemäß strichpunktiert angegebener Umfangskontur teilweise in den zuvor angegebenen ringförmigen Luftzuströmkanal 7 eingefahren. Das Triebwerk nach Fig. 1 und 7 besteht ferner aus einem mehrstufigen Axialverdichter 10, einer koaxial zur Triebwerksachse angeordneten Ringbrennkammer 14 und aus einer axial durchströmten Verdichterantriebsturbine 15, die über ihre Radscheibe 16 im Sinne eines einzigen Wellenstranges mit dem trommelartigen Rotor R des Axialverdichters 10 verbunden ist. Heißgasaustrittsseitig sind der axial durchströmten Antriebsturbine 15, innerhalb eines ringförmigen Heißgaskanals 19, in axialer Richtung umströmte Stützschaufeln 20 nachgeordnet. Am Ende des ringförmigen Heißgaskanals 19 geht die Triebwerksummantelung 6 in eine koaxial zur Triebwerksachse angeordnete düsenartige Endkante 13 über; dabei ist dem Triebwerk abgasaustrittsseitig ein weiterer pilzförmiger Absperrschieber 12 zugeordnet. In der mit durchgezogenen Linien angegebenen, am weitesten axial eingefahrenen Endstellung dieses Absperrschiebers 12 wird also ein ringförmiger Düsenaustrittsquerschnitt zwischen der düsenartigen Endkante 13 auf der einen Seite und dem in Strömungsrichtung konvergenten Umfangswandabschnitt des Absperrschiebers 12 ausgebildet. Die gestrichelt wiedergegebene Kontur des Absperrschiebers 12 verkörpert demnach die komplette Absperrstellung des betreffenden, vormals ringförmigen Düsenaustrittsquerschnittes. In dieser zuletzt genannten Absperrstellung wäre also das Triebwerk auch heißgasseitig gegenüber der äußeren Umgebungsluftströmung abgesperrt. Gemäß Fig. 1 und 7 sind ferner dem schon erwähnten Axialverdichter 10 des Triebwerks eintrittsseitig mehrere gleichförmig über dem Umfang verteilt angeordnete Stützschaufeln 17 zugeordnet. Wie insbesondere gemäß Fig. 1 ersichtlich, kann durch eine dieser hohlen Stützschaufeln 17 eine von außen angetriebene Welle 21 verdrehbar geführt sein, die am inneren Ende über ein Kegelradgetriebe K eine achszentral gelagerte Kugelrollspindel 22 antreibt. Bei Verdrehung der Kugelrollspindel 22 wird also eine auf dieser sitzende Kugelmutter 23, die innerhalb einer zylindrischen stationären Hülse 24 des Zentralkörpers 5 axial verschiebbar geführt angeordnet ist, der Schieber 1 im Sinne einer Axialverstellung mitgenommen, und zwar über eine Verbindungshülse, die beispielsweise frontseitig mit dem Schieber 1 fest verbunden ist sowie am übrigen Ende mit der schon beschriebenen und benannten Verstellmutter 23.

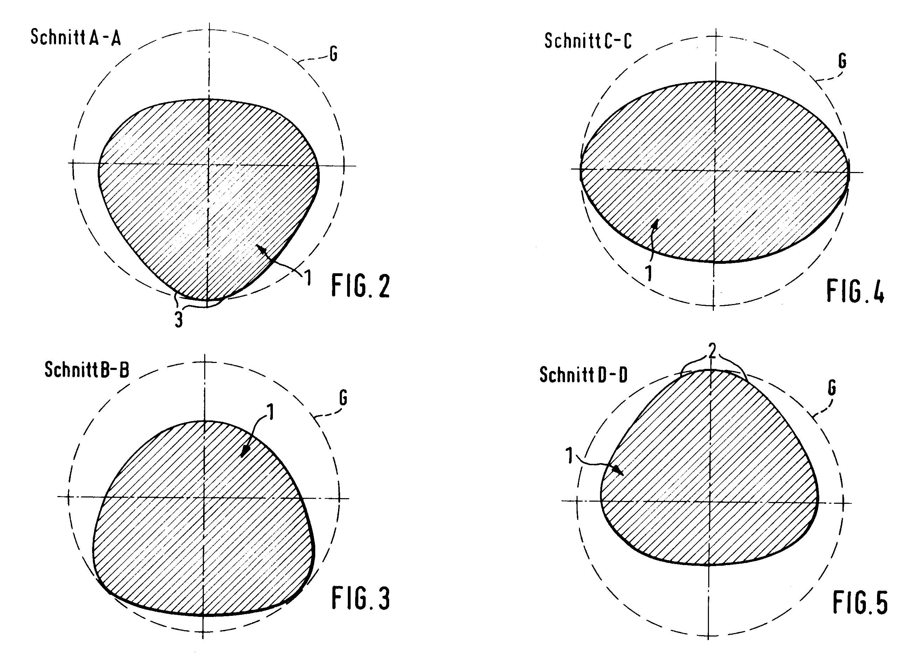

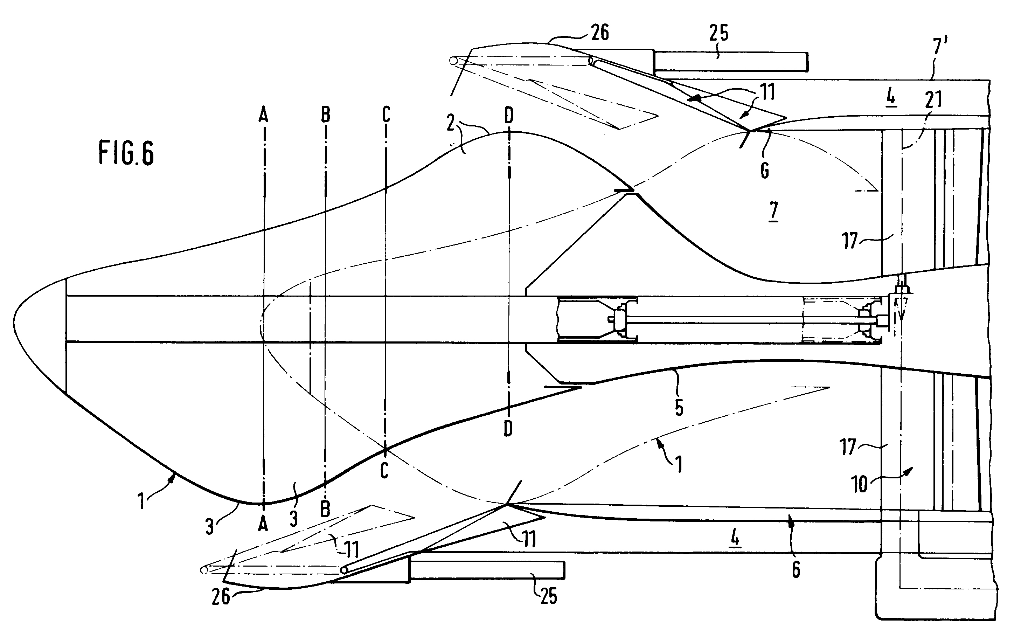

Gemäß Fig. 1 ist also ein axial verstellbarer Schieber 1 vorgesehen, der an gegenüber der zentralen Schieberachse A auf den größten relativen Durchmesser D ausgewölbten Flächenabschnitten 2,3 eine sich über dem äußeren Umfang erstreckende Absperrfläche aufweist, mit der er in Abstimmung auf eine stationäre Gegenfläche an einer ringförmigen Gehäuselippe G das Triebwerk luftansaugseitig wahlweise verschließt oder freilegt. Die Flächenabschnitt 2, 3 sind in Längs- und Querrichtung gekrümmt ausgewölbt und weisen jeweils einen radial maximal von der Schieberachse A entfernten Krümmungspunkt P2,P3 auf. Die Krümmungspunkte P2, P3 sind relativ zur Schieberachse A in axialem Abstand L sowie um 180° winkelversetzt angeordnet. Mit anderen Worten bilden dabei die ausgewölbten Flächenabschnitte 2,3 einen Schieber 1 mit in axialer sowie in Umfangsrichtung räumlich zueinander verschobener Tropfen- bzw. Pilzform aus. Der Schieber 1 weist in den senkrechten Schnittebenen S1, S2, die den ausgewölbten Flächenabschnitten 2,3 zugeordnet sind, ein in Bezug auf die Schieberachse A asymmetrisches polygonartiges Querschnittsprofil auf (siehe Schnitt A-A gemäß Fig. 2 und Schnitt D-D gemäß Fig. 5).

Beispielsweise gemäß Fig. 1 kann der Schieber 1 eine über dem Gesamtumfang gleichförmig leicht elliptische Absperrfläche ausbilden, die in einer Schrägebene E liegt, welche die ausgewölbten Flächenabschnitte 2,3 in den Krümmungspunkten P2 bzw. P3 schneidet. Ferner sollen dabei die schon benannten Schnittebenen S1,S2, die die räumlich versetzten, ausgewölbten Flächenabschnitte 2,3 in den Krümmungspuntken P2,P3 - in axialer Richtung gesehen - etwa mittig schneiden, zugleich den axialen Abstand L, und damit den maximalen Verstellweg des Schiebers 1 zum Absperren oder Freilegen des Triebwerks definieren.

Gemäß Fig. 1 ist ferner ersichtlich, daß der Schieber 1 zur gänzlichen Freigabe des betreffenden Luftzuströmquerschnitts bzw. der betreffenden Luftzuströmfläche F gegenüber der Gegenfläche an der zugehörigen stationären Gehäuselippe G in axialer Richtung ausgefahren ist.

In besonders vorteilhafter Weise kann die Erfindung insbesondere bei einem kombinierten Gasturbinen-Staustrahltriebwerk eingesetzt werden. Das in Verbindung mit Fig. 1 schon beschriebene Gasturbinenstrahltriebwerk könnte in diesem Fall dann als Turbobasistriebwerk fungieren. Es wäre dabei also das innere, für den Unterschall - und gegebenenfalls Überschallflugbetrieb ausgebildete Gasturbinenstrahltriebwerk, als Turbobasistriebwerk, von einem überwiegend ringförmigen Staudruckluftkanal 4 (Fig. 7) für den Hyperschallflugbetrieb ummantelt. Dabei wird der Staudruckluftkanal 4 zwischen einer äußeren zylindrischen Umfangswand 7' und dem betreffenden inneren zylindrischen Triebwerksummantelung 6 des Turbobasistriebwerks ausgebildet. Die Funktion der ansaugluftseitigen Absperrung oder Freilegung mittels des Schiebers 1 ist im Prinzip mit derjenigen nach Fig. 1 identisch, wobei es im Unterschied zu Fig. 1 gemäß Fig. 6 darum geht, den ringförmigen Staudruckluftkanal 4 wahlweise für die Staudruckluftzufuhr bei Staustrahlbetrieb freizulegen und dabei das Turbobasistriebwerk gegenüber Staudruckluftzufuhr abzusperren. In Zusammenschau des Gasturbinenstaustrahltriebwerks nach Fig. 6 und 7 soll ferner ein bei Verstellung des Schiebers 1 gleichzeitig in entgegengesetzter Richtung verstellbarer Ringschieber 11 vorgesehen sein, der den Staudruckluftkanal 4 bei freigelegter Ansaugluftzuführ in das Basistriebwerk verschließt oder bei abgesperrtem Basistriebwerk gegenüber der Staudruckluftzufuhr freilegt. Dieser Ringschieber 11 soll ferner in Anpassung an die räumlich verschobene Tropfen- oder Pilzform des Schiebers 1 kegelförmig erweitert sein und zwar in stromaufwärtiger Richtung derart, daß er in Absperrstellung des Staudruckluftkanals 4 mit einem stromabwärtigen Ende an der Gehäuselippe G stirnseitig aufsitzt.

Gemäß Fig. 6 soll bei abgeschaltetem Turbobasistriebwerk und alleinigem Staustrahlbetrieb der gesamte Zuströmquerschnitt für Staudruckluft in den Staudruckluftkanal 4 ringflächenartig ausgebildet sein; und zwar ringflächenartig zwischen dem Ringschieber 11 und dem tropfenförmigen Schieber 1 (Flächenabschnitte 2 und 3) auf der einen Seite sowie sektionsweise, zwischen rückwärtigen Flächenabschnitten des Ringschiebers 11 und benachbarten Wandabschnitten einer mehr- oder viereckig nach vorn auslaufend ausgebildeten Erweiterung 26 der äußeren Umfangswand 7'. Der genannte Ringschieber 11 kann über mehrere, beispielsweise vier gleichförmig über dem Umfang der betreffenden Erweiterung 26 verteilt angeordnete Verstellorgane 25 betätigt werden. Bei den Verstellorganen 25 kann es sich z. B. um pneumatisch oder hydraulisch betätigte Verstellzylinder handeln, die mit entsprechenden Zug- bzw. Druckstangen unter örtlicher Abdichtung in axialer Richtung durch Abschnitte der betreffenden Erweiterung 26 beweglich hindurchgeführt sind.

In der in Fig. 6 angegebenen, mit ausgezogenen Linien dargestellten Endstellung, bewirkt der Ringschieber 11 also eine Versperrung des Staudruckluftkanals 4 bei gleichzeitig freigegebener Ansaugluftzufuhr in das Turbobasistriebwerk, wobei die schräge Flächenkonturierung des ringförmigen Absperrschiebers 11 so gewählt ist, daß er in dieser Endstellung eine stromaufwärtige Fortsetzung des ringförmigen Luftzuströmkanals 7 in Verbindung mit den zuvor genannten örtlichen Abschnitten der räumlichen Erweiterung 26 ausbildet. In Verbindung mit Fig. 6 und 7 bewirkt der zu Fig. 1 und 7 schon beschriebene und erörterte heißgasseitige Absperrschieber 12 eine wahlweise Freilegung oder Absperrung des Turbobasistriebwerks gegenüber dem Staudruckluftkanal 4.

Die in Fig. 1 und 6 behandelte Absperreinrichtung mittels der betreffenden Schieber 1 wäre sinngemäß auch zur wahlweisen heißgasseitigen Absperrung oder Freilegung eines einkreisigen Triebwerks bzw. des Turbobasistriebwerks eines kombinierten Turbinen-Staustrahltriebwerks geeignet.

Asymmetrische. polygonartige Querschnittsprofile des Absperrschiebers 1 nach Fig. 1 oder 6 sind durch die betreffenden Schnitte über die Figuren 2, 3 und 5 wiedergegeben. Gemäß Schnitt C - C der Fig. 1 oder 6 ergibt sich in Fig. 4 ein symmetrisch elliptisches Querschnittsprofil des Schiebers 1. Der in den Fig. 2, 3 sowie 4 und 5 jeweils kreiszylindrisch dargestellte, gestrichelte Konturverlauf stellt die stirnseitige bzw. die Vorderansicht des Triebwerks in bezug auf die Gehäuselippe G dar.

In Ausbildung als kombiniertes Gasturbinen-Staustrahltriebwerk nach Fig. 6 und 7 kann sich an das in der Zeichnung in Fig. 7 hintere Ende der äußeren Umfangswand 7' ein Strahlrohr, koaxial zur Verlängerung der Triebwerksachse, anschließen, in welchem eine Nach- und Zusatzverbrennungseinrichtung anzuordnen wäre, wobei wiederum das stromabwärtige Ende dieses Strahlrohrs mit einer variablen Schubdüse in Verbindung stehen kann, die für die betreffenden Massendurchsätze und Engstquerschnitte vom Betrieb des Bodenstartfalles bis zum Flugbetrieb in äußerer Atmosphäre (Hyperschallflugbetrieb) auszulegen wäre.

## Patentansprüche

1. Gasturbinenstrahltriebwerk mit mindestens einem axial verstellbar angeordneten Schieber (1), der an gegenüber der zentralen Schieberachse (A) auf den größten Durchmesser (D) ausgewölbten Flächenabschnitten (2;3) eine sich über dem äußeren Umfang erstreckende Absperrfläche aufweist, mit der er in Abstimmung auf eine stationäre Gegenfläche an einer ringförmigen Gehäuselippe (G) das Triebwerk wahlweise verschließt oder freilegt, dadurch gekennzeichnet, daß
- der Schieber (1) in Längs- und Querrichtung gekrümmt ausgewölbte Flächenabschnitte (2,3) aufweist,
- die Flächenabschnitte (2;3) jeweils einen maximal radial von der Schieberachse (A) entfernten Krümmungspunkt (P2;P3) aufweisen,
- die Krümmungspunkte (P2,P3) relativ zur Schieberachse (A) in einem axialen Abstand (L) sowie um 180° winkelversetzt angeordnet sind,
- die am gesamten Umfang des Schiebers (1) enthaltene Absperrfläche in einer Schrägebene (E) liegt, die die Krümmungspunkte (P2;P3) schneidet.

2. Triebwerk nach Anspruch 1, dadurch gekennzeichnet, daß die ausgewölbten Flächenabschnitte (2;3) einen Schieber (1) mit in axialer sowie in Umfangsrichtung räumlich zueinander verschobener Tropfen- oder Pilzform ausbilden.

3. Triebwerk nach Anspruch 1 oder 2, dadurch geknnzeichnet, daß der Schieber (1) in senkrechten Schnittebenen, insbesondere in Schnittebenen (S1;S2), die den ausgewölbten Flächenabschnitten (2;3) zugeordnet sind, ein in Bezug auf die Schieberachse (A) asymmetrisch polygonartiges oder elliptisches Querschnittsprofil aufweist.

4. Triebwerk nach einem der Ansprüche 1 bis 3, dadurch gekennzeichnet, daß der Schieber (1) einen über dem Gesamtumfang gleichförmig elliptischen oder kreisförmigen Absperrflächenverlauf ausbildet, der bezüglich der Schrägebene (E) auf einen entsprechend schräg abgeschnittenen Endverlauf des an der Gehäuselippe (G) im Querschnitt kreiszylindrisch oder elliptisch endenden Gehäuses (6) abgestimmt ist.

5. Triebwerk nach einem oder mehreren der Ansprüche 1 bis 4, dadurch gekennzeichnet, daß zwei Schnittebenen (S1;S2) die räumlich versetzten, ausgewölbten Flächenabschnitte (2;3) in den Krümmungspunkten (P2;P3) - in axialer Richtung gesehen - mittig schneiden und zugleich den axialen Abstand (L) und den maximalen Verstellweg des Schiebers (1) zum Absperren oder Freilegen des Triebwerks definieren.

6. Triebwerk nach einem oder mehreren der Ansprüche 1 bis 5, dadurch gekennzeichnet, daß der Schieber (1) zur wahlweisen Freilegung oder Absperrung einer Luftzuströmfläche (F) in das Triebwerk oder einer Heißgasabströmfläche des Triebwerks ausgebildet und angeordnet ist und, zur betreffenden Flächenfreilegung, gegenüber der Gegenfläche an der zugehörigen stationären Gehäuselippe (G) in axialer Richtung ausgefahren ist.

7. Triebwerk nach einem oder mehreren der Ansprüche 1 bis 6, dadurch gekennzeichnet, daß es als kombiniertes Gasturbinen- Staustrahl-Triebwerk ausgebildet ist, bei dem das innere, für den Unterschall- und gegebenenfalls Überschallflugbetrieb vorgesehene Gasturbinenstrahltriebwerk als Basistriebwerk von einem überwiegend ringförmigen Staudruckluftkanal (4) für den Hyperschallflugbetrieb ummantelt ist, und worin mindestens ein derartiger Schieber (1) vorgesehen ist, der bei eingeschaltetem Staustrahlantrieb entweder die Lufzuströmfläche (F) in das Basistriebwerk oder die Heißgasaustrittsfläche des Basistriebwerks gegenüber der Staudruckluftströmung absperrt.

8. Triebwerk nach einem oder mehreren der Ansprüche 1 bis 7, dadurch gekennzeichnet, daß dem Schieber (1) ein stationärer Zentralkörper (5) zugeordnet ist, der sich in gänzlicher Freigabestellung der Zuströmfläche (F) oder der Abströmfläche von der Triebwerksinnenseite aus, überwiegend nicht rotationssymmetrisch divergierend an das eine Schieberende flächenbündig anschließt und der zusammen mit einer zur Gehäuselippe (G) auslaufenden Wandsektion des Triebwerksgehäuses (6) einen ringförmigen Luftzuströmkanal (7) oder Heißgasabströmkanal ausbildet und der zum Absperren der Zu- bzw. Abströmfläche vom Schieber (1) überfahrbar ist.

9. Triebwerk nach einem oder mehreren der Ansprüche 1 bis 8, dadurch gekennzeichnet, daß der Schieber (1) und der Zentralkörper (5) Bestandteile des Lufteinlaufes des Verdichters (10) des Basistriebwerks sind.

10. Triebwerk nach Anspruch 9, dadurch gekennzeichnet, daß ein bei Verstellung des Schiebers (1) gleichzeitig in entgegengesetzter Richtung verstellbarer Ringschieber (11) zum wahlweisen Freilegen oder Absperren des Staudruckluftkanals (4) gegenüber der zugeführten Luftströmung vorgesehen ist, der in Anpassung an die räumlich verschobene Tropfenform des Schiebers (1) kegelförmig erweitert und schräg zur Triebwerksachse angeordnet ist, so daß er in Absperrstellung des Staudruckluftkanals (4) mit einem stromabwärtigen Ende an der Gehäuselippe (G) stirnseitig aufsitzt.

11. Triebwerk nach Anspruch 9, dadurch gekennzeichnet, daß der Zentralkörper (5) einen in Richtung der Strömung asymmetrisch konvergenten, rotationssymmetrisch divergenten Konturverlauf aufweist.

## Claims

1. A gas turbine jet engine with at least one slider (1) which is arranged so as to be axially adjustable and has a closing surface extending over the outer periphery on surface portions (2; 3) arched outwards to the maximum diameter (D) relative to the central slider axis (A), with which closing surface the slider (1) optionally closes or opens the engine in coordination with an opposed stationary surface on an annular housing lip (G), **characterised in that**
- the slider (1) has surface portions (2, 3) which are arched outwards and curved in the longitudinal and transverse direction,
- the surface portions (2, 3) each have a point of curvature (P2; P3) at a maximum radial distance from the slider axis (A),
- the points of curvature (P2, P3) are spaced at an axial distance (L) and offset by an angle of 180° relative to the slider axis (A),
- the closing surface extending over the entire periphery of the slider (1) lies in an oblique plane (E), which intersects the points of curvature (P2; P3).

2. An engine according to Claim 1, **characterised in that** the arched surface portions (2; 3) form a slider (1) having a drop shape or mushroom shape displaced spatially in the axial and peripheral direction.

3. An engine according to Claim 1 or 2, **characterised in that,** in vertical intersecting planes, particularly in intersecting planes (S1; S2) which are associated with the arched surface portions (2; 3), the slider (1) has an asymmetrically polygonal or elliptical cross-sectional profile relative to the slider axis (A).

4. An engine according to any one of Claims 1 to 3, **characterised in that** the closing surfaces of the slider (1) have a shape which is uniformly elliptical or circular over the entire periphery and which, with respect to the oblique plane (E), is coordinated with a correspondingly obliquely cut end shape of the housing (6) at the housing lip (G), which is circular cylindrical or elliptical in cross-section.

5. An engine according to one or more of Claims 1 to 4, **characterised in that** two intersecting planes (S1; S2) intersect centrally the spatially offset, arched surface portions (2; 3) at the points of curvature (P2; P3) when viewed in the axial direction, and at the same time define the axial distance (L) and the maximum adjusting path of the slider (1) to close or open the engine.

6. An engine according to one or more of Claims 1 to 5, **characterised in that** the slider (1) is designed and arranged for optionally exposing or closing an air inflow surface (F) into the engine or a hot-gas outflow surface from the engine and, to open the relevant surface, is extended in the axial direction relative to the opposite surface on the associated stationary housing lip (G).

7. An engine according to one or more of Claims 1 to 6, **characterised in that** it is formed as a combined gas-turbine ram-jet engine, in which the inner gas-turbine jet engine, which is the basic engine and is provided for subsonic and where appropriate supersonic aviation, is surrounded by a substantially annular ram-pressure air channel (4) for hypersonic aviation, and in which at least one such slider (1) is provided which, when the ram jet drive is switched on, either closes the air inflow surface (F) into the basic engine or the hot-gas outflow surface from the basic engine in relation to the flow of ram pressure air.

8. An engine according to one or more of Claims 1 to 7, **characterised in that** the slider (1) is associated with a stationary central body (5) which, in the full open position of the inflow surface (F) or the outflow surface, diverges from the inside of the engine in a substantially rotationally asymmetrical manner and fits face-to-face against one end of the slider and which, together with a wall section of the engine housing (6) ending in the housing lip (G), forms an annular air inflow channel (7) or hot-gas outflow channel, and over which the slider (1) can be moved in order to close the inflow or outflow surface.

9. An engine according to one or more of Claims 1 to 8, **characterised in that** the slider (1) and the central body (5) are components of the air inlet of the compressor (10) of the basic engine.

10. An engine according to Claim 9, **characterised in that** an annular slider (11), which is adjustable simultaneously in the opposite direction during the adjustment of the slider (1), is provided for optionally opening or closing the ram pressure air channel (4) in relation to the supplied air flow, which annular slider (11) is widened conically in conformity with the spatially displaced drop shape of the slider (1) and is arranged obliquely to the engine axis so that, when the ram pressure air channel (4) is in the closed position, the end of the annular slider (11) located downstream rests against the front end of the housing lip (G).

11. An engine according to Claim 9, **characterised in that** the central body (5) has an outline which converges asymmetrically and diverges rotationally symmetrically in the direction of flow.

## Revendications

1. Turboréacteur comportant au moins un élément d'obturation coulissant (1), susceptible d'être déplacé en direction axiale, qui comporte, sur des tronçons de surface (2; 3) bombés par rapport à l'axe central (A) de l'élément coulissant, jusqu'au diamètre (D) le plus grand, une surface d'obturation s'étendant sur toute la périphérie extérieure, et par l'intermédiaire de laquelle il obture ou ouvre sélectivement le réacteur, en étant ajusté à une surface conjuguée stationnaire réalisée sur une lèvre de carter (G) de forme annulaire, caractérisé en ce que
- l'élément coulissant (1) comporte des tronçons de surface (2, 3) bombés et courbés dans la direction longitudinale et dans la direction transversale,
- les tronçons de surface (2; 3) présentent chacune un point de courbure (P2; P3) d'éloignement radial maximum de l'axe (A) de l'élément coulissant,
- les points de courbure (P2, P3) sont disposés de manière à présenter entre-eux une distance axiale (L), et en étant décalés angulairement de 180°,
- la surface d'obturation réalisée sur la totalité de la périphérie de l'élément coulissant (1) est située dans un plan oblique (E) qui coupe les points de courbure (P2; P3).

2. Réacteur selon la revendication 1, caractérisé en ce que les tronçons de surface bombés (2; 3) forment un élément coulissant (1) et présentent une forme de goutte ou de champignon en étant décalés dans l'espace, dans la direction axiale ainsi que dans la direction périphérique.

3. Réacteur selon la revendication 1 ou 2, caractérisé en ce que l'élément coulissant (1) présente, dans des plans de coupe normaux, notamment des plans de coupe (S1; S2) associés aux tronçons de surface bombés (2; 3), un profil de section transversale dissymétrique par rapport à l'axe (A) de l'élément coulissant, du type polygonal ou elliptique.

4. Réacteur selon l'une des revendications 1 à 3, caractérisé en ce que l'élément coulissant (1) réalise une allure de surface d'obturation de forme elliptique ou circulaire régulière sur la totalité de la périphérie, et adaptée, quant au plan oblique (E), à l'allure d'extrémité du carter (6) coupé de manière oblique correspondante, au niveau de la lèvre de carter (G), ce carter se terminant de manière cylindrique circulaire ou elliptique en section transversale.

5. Réacteur selon l'une ou plusieurs des revendications 1 à 4, caractérisé en ce que deux plans de coupe (S1; S2) coupent, de manière centrale en se référant à la direction axiale, aux points de courbure (P2; P3), les tronçons de surface bombés (2; 3) décalés dans l'espace, et définissent en même temps la distance axiale (L) d'espacement et la course de déplacement maximale de l'élément coulissant (1) pour l'obturation ou l'ouverture du réacteur.

6. Réacteur selon l'une ou plusieurs des revendications 1 à 5, caractérisé en ce que L'élément coulissant (1) est réalisé et disposé dans le réacteur pour l'ouverture ou l'obturation sélective d'une surface d'entrée d'air (F) du réacteur, ou d'une surface d'éjection des gaz chauds du réacteur, et est extrait en direction axiale, par rapport à la surface conjuguée sur la lèvre de carter (G) stationnaire, associée, pour l'ouverture de la surface considérée.

7. Réacteur selon l'une ou plusieurs des revendications 1 à 6, caractérisé en ce qu'il est réalisé en tant que turbo-statoréacteur combiné, dans lequel le turboréacteur intérieur prévu pour le fonctionnement en vol subsonique ou éventuellement supersonique, est entouré, en tant que réacteur de base, d'un canal d'air dynamique (4), essentiellement annulaire, prévu pour le fonctionnement en vol hypersonique, le réacteur étant pourvu d'au moins un élément coulissant (1) de ce type, qui, en fonctionnement en statoréacteur, obture soit la surface d'entrée d'air (F) dans le réacteur de base, ou la surface d'éjection des gaz chauds du réacteur de base par rapport à l'écoulement d'air dynamique.

8. Réacteur selon l'une ou plusieurs des revendications 1 à 7, caractérisé en ce qu'à l'élément coulissant (1) est associé un corps central (5) stationnaire, qui, dans la position de totale ouverture de la surface d'entrée d'air (F) ou de la surface d'éjection, se raccorde, à partir du côté intérieur du réacteur, de manière essentiellement non symétrique en révolution et divergente, à l'extrémité de l'élément coulissant en étant aligné avec la surface de celui-ci, le corps central (5) formant avec une section de paroi du carter de réacteur (6) qui se termine par la lèvre de carter (G), un canal d'entrée d'air (F) ou un canal d'éjection des gaz chauds annulaire, et l'élément coulissant (1) étant susceptible de se déplacer par-dessus ce corps central pour obturer la surface d'entrée ou d'éjection.

9. Réacteur selon l'une ou plusieurs des revendications 1 à 8, caractérisé en ce que l'élément coulissant (1) et le corps central (5) forment des parties constitutives de l'entrée d'air du compresseur (10) du réacteur de base.

10. Réacteur selon la revendication 9, caractérisé en ce qu'il est prévu un élément coulissant annulaire (11), qui lors du déplacement de l'élément coulissant (1) se déplace simultanément en sens opposé, et est destiné à ouvrir ou à obturer de manière sélective le canal d'air dynamique (4) par rapport à l'écoulement d'air d'entrée, cet élément coulissant annulaire (11) s'évasant de manière conique et étant disposé de manière oblique par rapport à l'axe du réacteur, en étant adapté à la forme de goutte décalée dans l'espace de l'élément coulissant (1), de sorte que dans la position d'obturation du canal d'air dynamique (4), il repose frontalement sur la lèvre de carter (G), avec son extrémité aval.

11. Réacteur selon la revendication 9, caractérisé en ce que le corps central (5) présente une allure de contour dissymétriquement convergente dans la direction de l'écoulement, et symétriquement divergente en révolution.
